# EUROPEAN PATENT APPLICATION

(11) **EP 1 801 490 A1**
(43) Date of publication of application: **27.06.2007**
(21) Application number: 05257834.1
(22) Date of filing: 20.12.2005
(51) Int. Cl.: F21S 8/00, F21L 4/02, H02J 7/02

(54) **Lamp, Safety Light**

(71) Applicant: Haines, Christopher John Maxwell, Mayford Woking Surrey GU22 0NS (GB)
(72) Inventor: Haines, Christopher John Maxwell, Mayford Woking Surrey GU22 0NS (GB)

(57) **Abstract**

Lighting apparatus there shown comprises a rechargeable lamp 1 and a recharger 11, the former being demountably arranged on the latter. The lamp has a case 2, with a charging contacts 3 at one end and a transparent cover 4 for LEDs 5 at the other. The case carries a three position switch 8, the positions being:
ON,
AUTOMATIC,
OFF

In use of the lamp, its LEDs can be switched OFF, or ON, or can be allowed to illuminate in the absence of ambient light detected by the sensor 7, when the switch is in mid position. However, it would not normally be used like this since the lamp only illuminates if light is excluded from the sensor and this can also happen unintentionally.

The recharger 11 has recharging contacts 16 complementary to the contacts 3. It also has an LED 17 for indicating the state of charging of a lamp in the receptacle. At the back of the receptacle, which holds the lamp vertically via end walls 18,19, the housing has formations 20 for centring the switch to the AUTOMATIC position.

## Description

The present invention relates to a lamp.

Rechargeable lamps are known. Night lights are known. However, in the event of power failure a night light is no use since it fails also. Further a rechargeable lamp cannot readily be found in the dark, since it will not be switched on.

The object of the present invention is to provide a lamp incorporating the features of both a night light and a rechargeable lamp.

According to the invention there is provided lighting apparatus combining a rechargeable lamp and recharging apparatus:
- the rechargeable lamp comprising:

- a case,
- a light source mounted on the case,
- a battery mounted in the case,
- recharging connections provided on the case and
- a photodiode for switching power from the battery to the light source in absence of ambient light; and
- the recharging apparatus comprising
- a housing,
- a receptacle on the housing for the rechargeable lamp case,
- mains connections and complementary recharging connections on the housing and
- a circuit in the housing for recharging the battery via the recharging connections.

Whilst the light source can be an incandescent bulb, it is preferably a light emitting diode, i.e. an LED, or a plurality of these.

Where a plurality ofLEDs are provided, it is preferable for certain only of them to be illuminated when the lamp is received on the recharging apparatus and for all of them to be illuminated when the lamp is being used as a hand held lamp. Accordingly the housing and the case are preferably provided with means for switching circuitry in the apparatus between these illumination modes.

In the preferred embodiment, the lamp is provided with a manual switch on the case for switching power from the battery to the light source for use as a rechargeable lamp. In accordance with a particular preferred feature, the manual switch and the housing are provided with co-operating features, whereby the switch is set for reduced illumination in absence of ambient light.

To help understanding of the invention, a specific embodiment thereof will now be described by way of example and with reference to the accompanying drawings, in which:
Figure 1 is a front view of one embodiment of lighting apparatus of the invention;
Figure 2 is a perspective view from above of the lamp of the apparatus of Figure 1;
Figure 3 is an oblique side view of the recharger of the apparatus of Figure 1;
Figure 4 is a rear perspective view of the lamp of Figure 2; and
Figure 5 is a circuit diagram of the lighting apparatus.

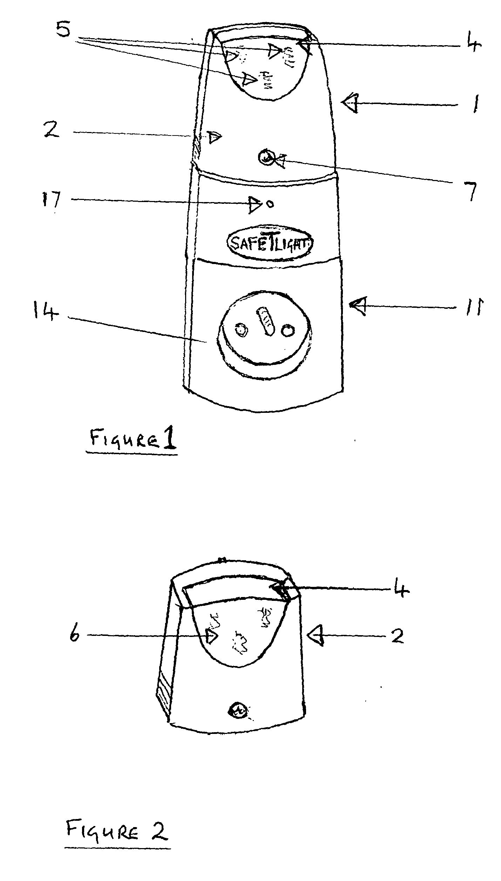

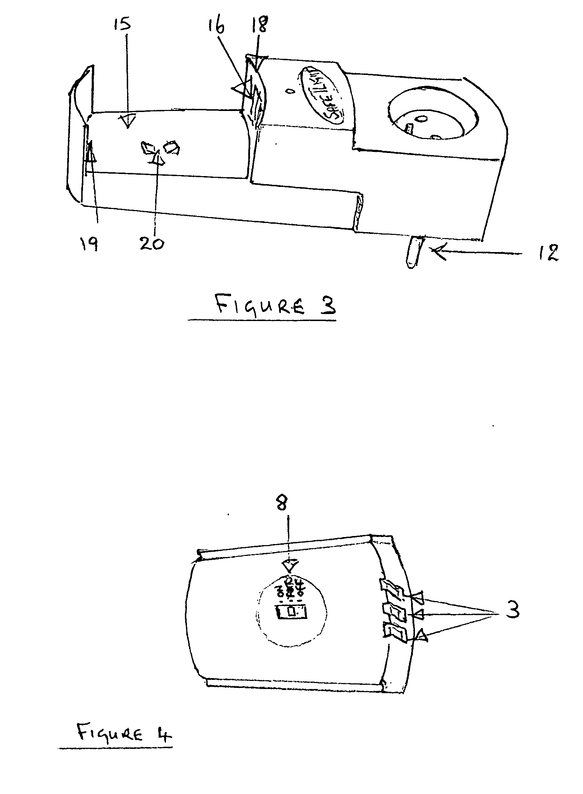

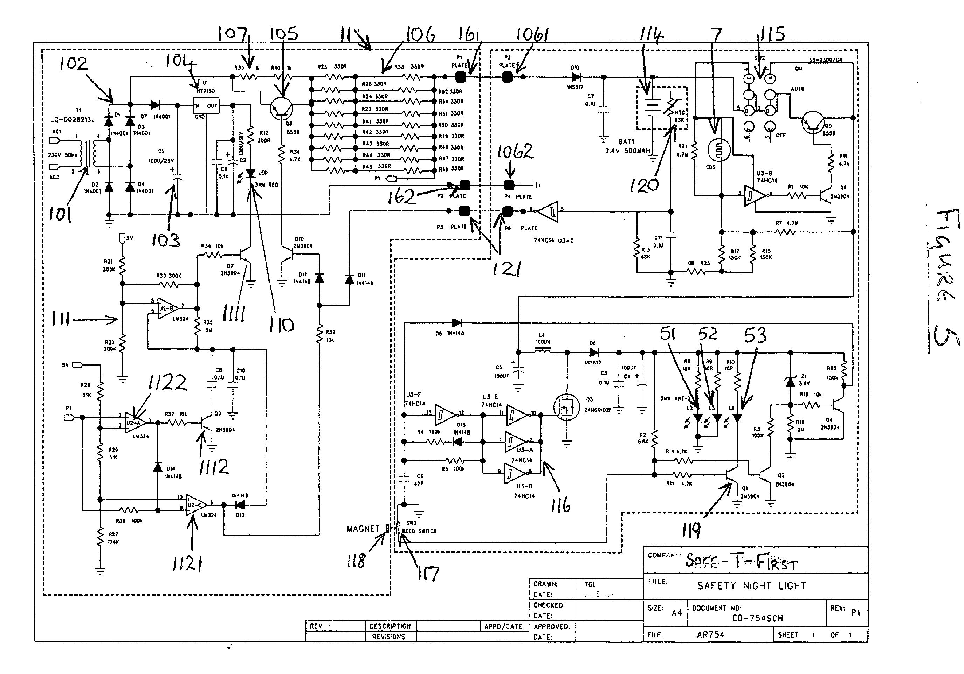

Referring to Figures 1 to 4, the lighting apparatus there shown comprises a rechargeable lamp 1 and a recharger 11, the former being demountably arranged on the latter. The lamp has a case 2, with charging contacts 3 at one end and a transparent cover 4 for LEDs 5 at the other. The LEDs are directed forwards towards an end part of the cover. This also has a front part 6 through which light radiating sideways from the LEDs can shine. Below the front part 6, in the recharge/night light orientation of Figure 1, the case carries a light sensor 7. On the opposite face, the case carries a three position switch 8, the positions being:
ON,
AUTOMATIC,
OFF.

In use of the lamp, its LEDs can be switched OFF, or ON, or can be allowed to illuminate in the absence of ambient light detected by the sensor 7, when the switch is in mid position. However, it would not normally be used like this since the lamp only illuminates if light is excluded from the sensor and this can also happen unintentionally.

The recharger 11 has mains contacts 12 and a complementary mains socket 14, whereby it can be plugged in and left permanently connected, with other appliances able to be plugged into it. It has a housing shaped as a receptacle 15 complementary to the lamp casing. The housing has recharging contacts 16 complementary to the contacts 3. It also has an LED 17 for: indicating the state of charging of a lamp in the receptacle and quick flashing warning when the lamp is removed. At the back of the receptacle, which holds the lamp vertically via end walls 18,19, the housing has formations 20 for centring the switch to the AUTOMATIC position.

Turning now in more detail to the circuit shown in Figure 5, the recharger 11 has a transformer 101, a rectifier bridge 102, smoothing capacitor 103 for transforming 230 volts AC to 12 volts DC. A transistor switch 105 switches this voltage via a multi-component resistive current limiter 106, for limiting current on initial connection of the lamp to a first charging contact 161, with an earth return contact 162, the transistor by-passing an additional current limiting resistance 107 when on

A voltage regulator 104 further reduces the voltage to 5 volts, for powering the following control circuitry, including the transistor switch 105.

A charge indicating LED 110 is provided. When charging starts, an oscillator circuit 111 causes the LED to flash at 0.5Hz. The battery voltage is applied to comparators 1121,1122 which respectively switch on the transistor switch 105 and the oscillator transistors 1111,1112. When the comparators detect that the battery voltage has exceeded a threshold, the transistor switch 105 is switched off and the oscillator stops oscillating, with the charge indicating LED remaining permanently ON.

Turning to the lamp circuit, it comprises complementary contacts 1061, 1062 to a battery pack 114. A three position switch 115 has an ON position in which the battery voltage is passed to a voltage step up circuit 116 for powering the LEDs 51,52,53 altogether. They are also powered if the light sensor 7 detects an absence ambient light. This occurs regardless of whether the switch is ON or set to "automatic". However, if the lamp is mounted on the charger for night light use, a reed switch 117, in co-operation with a magnet 118 within the housing switches off via transistor switch 119.

The battery pack is provided with a temperature sensor 120 which, via third contacts 121 switches off the transistor switch 105 in event of overheating of the batteries.

## Claims

1. Lighting apparatus combining a rechargeable lamp and recharging apparatus:
• the rechargeable lamp comprising:
• a case,
• a light source mounted on the case,
• a light source comprising a plurality of light emitting diodes,
• switching circuitry for illuminating fewer of the light emitting diodes when the lamp is received on to the recharging housing and
• more of them when it is removed there from
• a battery mounted in the case,
• recharging connections provided on the case and
• a photodiode for switching power from the battery to the light source in absence of ambient light; and
• the recharging apparatus comprising
• a housing,
• a receptacle on the housing for the rechargeable lamp case,
• mains connections and complementary recharging connections on the housing and
• a circuit in the housing for recharging the battery via the recharging connections.

2. Lighting apparatus as claimed in claim 1, wherein the light source is at least one incandescent bulb.

3. Lighting apparatus as claimed in claim 1 or 2, wherein the lamp is provided with a manual switch on the case for switching power from the battery to the light source for use as a manual lamp.

4. Lighting apparatus as in any preceding claim, where the manual switch and the receiving housing are provided with co-operating features, whereby the switch is automatically set for reduced illumination in the absence of ambient light.

5. Lighting apparatus as in claim 4, where the setting of the switch also makes the circuit so that the light source illuminates without mains power.

6. Lighting apparatus as in any preceding claim, wherein the lamp and the recharging apparatus are provided respectively with co-operating elements switching the said circuitry illuminating fewer of the LEDs.

7. Lighting apparatus as claimed in any preceding claim, wherein the majority of the light source is directed in one direction and some light is adapted to radiate in a transverse direction, and the case carries a cover for the light source allowing light to radiate in both directions.

8. Lighting apparatus as claimed in any preceding claim, wherein the housing has mains contacts and a complementary mains socket.

9. Lighting apparatus substantially as hereinbefore described with reference to the accompanying drawings.
